# EUROPÄISCHE PATENTANMELDUNG

(11) **EP 0 665 261 A2**
(43) Veröffentlichungstag der Anmeldung: **02.08.1995**
(21) Anmeldenummer: 94120212.9
(22) Anmeldetag: 20.12.1994
(51) Int. Cl.: C08J 5/12, B29C 65/40

(54) **Verfahren zur Herstellung von Stossverbindungen an Gummiprofilen**

(30) Priorität: 31.01.1994 DE 4402822
(71) Anmelder: METZELER Automotive Profiles GmbH, D-88131 Lindau (DE)
(72) Erfinder: Glagow, Klaus, D-88142 Wasserburg (DE); Raule, Michael, D-88239 Wangen (DE); Gerling, Hans-Jürgen, A-6932 Langen (AT); Walter, Wolfgang, D-88239 Wangen (DE); Krause, Fritz, D-88239 Wangen (DE)
(74) Vertreter: Preissner, Nicolaus, Dipl.-Ing.

(57) **Zusammenfassung**

Bei einem Verfahren zur Stoßverbindung von Gummiprofilen (1,5), insbesondere für die Fahrzeugindustrie, ist zur einfachen, dauerhaften und elastischen Verbindung erfindungsgemäß vorgesehen, daß auf die Stoßflächen der beiden zu verbindenden Profile ein erhitztes Thermoplast (7,8) in Form von Polyethylen aufgebracht und die beiden beschichteten Stoßflächen zusammengeführt und abgekühlt werden.

## Beschreibung

Die Erfindung bezieht sich auf ein Verfahren zur Herstellung von Verbindungen an Gummiprofilen, insbesondere für die Fahrzeugindustrie.

Bei Verbindung von Gummiprofilen Stoß an Stoß mit gleichem Querschnitt ist es bisher üblich gewesen, diese Profile durch mechanische Verbindungen, wie z.B. eingeschobene Stöpsel oder Metallstücken mit Widerhaken, durchzuführen. Derartige Verbindungen sind jedoch - bezogen auf die Dichtflächen - nicht formschlüssig und daher an der Verbindungsstelle undicht, so daß hier die Gefahr eines Wassereintritts und einer Korrosion darunterliegender Teile besteht.

Eine weitere Möglichkeit der Verbindung derartiger Profilstoßflächen besteht darin, die Profile an ihren Stoßflächen zusammenzuvulkanisieren, was jedoch eine entsprechend lange Prozeßzeit von ca. drei Minuten erfordert, wie sie bei Vulkanisationsvorgängen üblich ist.

Der vorliegenden Erfindung liegt daher die Aufgabe zugrunde, ein Verfahren anzugeben, mit der eine solche Stoßverbindung auf einfache Weise schnell und dauerhaft hergestellt werden kann, die dabei im Verbindungsbereich elastisch und dicht ist und nur eine kurze Prozeßzeit erfordert.

Zur Lösung dieser Aufgabe ist erfindungsgemäß vorgesehen, daß auf die Stoßflächen der beiden zu verbindenden Profile ein erhitztes Thermoplast aufgebracht und die beiden beschichteten Stoßflächen zusammengeführt und abgekühlt werden.

Zweckmäßigerweise bestehen dabei die Gummiprofile aus EPDM, während als Thermoplast Polyethylen verwendet wird.

Da es sich gezeigt hat, daß die Verbindung von EPDM und Polyethylen sehr hochwertig ist, erfüllt diese Verbindung damit auch die üblichen Spezifikationen der Fahrzeugindustrie.

Zweckmäßig ist es dabei, wenn die Stoßstellen vor dem Auftragen des Thermoplastes vorgewärmt werden.

Zum Auftragen des Thermplastes auf die Stoßflächen kann eine mit heißem Thermoplast benetzte Platte verwendet werden.

Anhand einer schematischen Zeichnung sind Aufbau und Funktionsweise eines Ausführungsbeispiels nach der Erfindung näher erläutert. Dabei zeigen:
- Fig. 1: die perspektivisiche Ansicht eines Profils, das an seiner Stoßstelle mit einem gleichartigen Profil verbunden werden soll,
- Fig. 2: die beiden zu verbindenden Profilabstände in Seitenansicht im beschichteten Zustand und
- Fig. 3: eine Seitenansicht der beiden verbundenen Profilabschnitte.

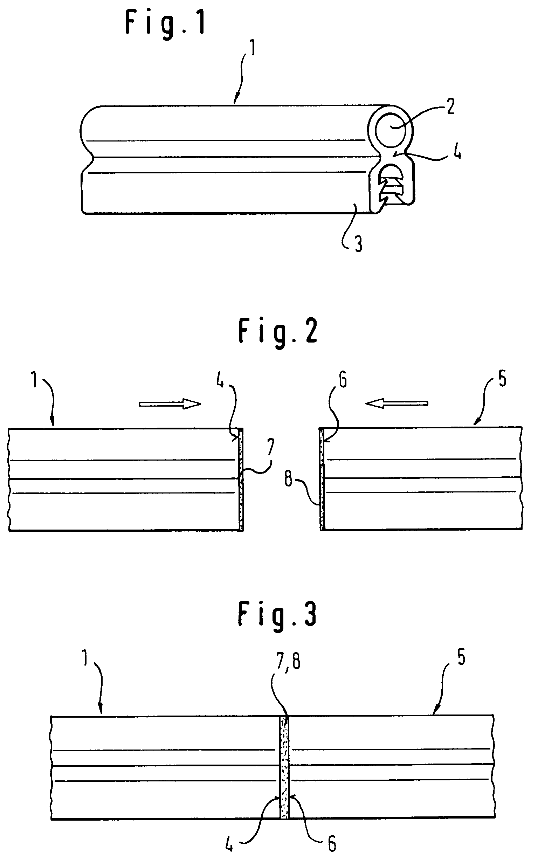

Wie man aus Fig. 1 ersieht, weist das Stoß an Stoß zu verbindende Profil 1 beispielsweise eine Hohlkammer 2 und einen darunter anextrudierten, U-förmigen Klemmbereich 3 auf.

Die Stoßfläche 4 des Profils 1 soll nun mit einer entsprechenden Stoßfläche eines Profils mit gleichem Querschnitt dauerhaft verbunden werden.

In Fig. 2 sind die beiden zu verbindenden Profilabschnitte 1 und 5 in Seitenansicht gezeigt. Sie werden zweckmäßigerweise zunächst mit entsprechendem Abstand zueinander positioniert, so daß sich ihre Stoßstellen 4 und 6 einander gegenüberstehen. Anschließend werden die beiden Stoßstellen 4 und 6 mit einem erhitzten und damit weichen bzw. flüssigen Thermoplast 7 und 8 gleichmäßig beschichtet.

Zweckmäßigerweise wird dabei als Thermoplast Polyethylen verwendet, das zu den üblicherweise aus EPDM bestehenden Profilen eine sehr gute Haftung aufweist. Dieses erhitzte Polyethylen kann dabei mit einer entsprechend benetzten Platte, die Durchbrechungen aufweisen kann, auf die Stoßflächen 4 und 6 in dünner Schicht aufgebracht werden. Es kann dabei auch noch zweckmäßig sein, diese Stoßflächen 4 und 6 vor Aufbringen des Polyethylens entsprechend zu erwärmen.

Entsprechend der Darstellung in Fig. 3 werden dann die beiden Profilabschnitte 1 und 5 mit ihren beschichteten Stoßflächen 4 und 6 zusammengefahren, so daß die beiden Polyethylenschichten 7 und 8 sich berühren und einen innigen Verbund eingehen.

Nach Erkalten und Erstarren der Polyethylenschicht 7, 8 ist damit eine feste Verbindung der beiden Profilabschnitte 1 und 5 geschaffen.

Ein besonderer Vorteil einer solchen Verbindung besteht darin, daß die Stoßstellen 4 und 6 zwischen den beiden Profilen 1 und 5 - insbesondere, wenn es sich um ein Hohlkammerprofil handelt - elastisch gehalten werden, so daß die physikalischen Werte für die Einfederung der Hohlkammer auch im Bereich des Stosses erreicht werden.

Die wesentlichen Vorteile einer solchen Verbindung bestehen darin, daß nur kurze und damit sehr wirtschaftliche Prozeßzeiten für die Herstellung der Verbindung erforderlich sind, wobei diese Verbindung mit einfachen Werkzeugen und einfachen Maschinen hergestellt werden kann. Dabei ist bei Hohlkammerprofilen an der Verbindungsstelle kein Kern erforderlich, so daß damit auch ein Einbringen und ggf. Herausnehmen und nachträgliches Verschließen der Hohlkammer entbehrlich sind.

Die fertige Dichtung kann somit als geschlossener Ring beim Fahrzeughersteller angeliefert werden, wodurch sich die Montage erheblich erleichtert und eine Dichtigkeit rundum - also auch an der Stoßstelle - gegeben ist.

Gleichzeitig werden durch das neue Verbindungsverfahren Korrosionen, z.B. von einextrudierten Metallverstärkungen, vermieden. Darüberhinaus ist auch ein Zusammenfügen von Profilen mit bereits eingebrachter Dichtmasse möglich, da schon der Bereich unmittelbar an die Stoßstelle angrenzend relativ kühl bleibt. Schließlich ergibt sich eine erhebliche optische Verbesserung durch eine fugenlose Verbindung der Profilenden.

## Patentansprüche

1. Verfahren zur Herstellung von Stoßverbindungen von Gummiprofilen, insbesondere für die Fahrzeugindustrie, dadurch gekennzeichnet, daß auf die Stoßflächen der beiden zu verbindenden Profile ein erhitztes Thermoplast aufgebracht und die beiden beschichteten Stoßflächen zusammengeführt und abgekühlt werden.

2. Verfahren nach Anspruch 1, dadurch gekennzeichnet, daß die Gummiprofile aus EPDM bestehen.

3. Verfahren nach Anspruch 1, dadurch gekennzeichnet, daß als Thermoplast Polyethylen verwendet wird.

4. Verfahren nach Anspruch 1 bis 3, dadurch gekennzeichnet, daß die Stoßstellen vor dem Auftragen des Thermoplastes vorgewärmt werden.

5. Verfahren nach Anspruch 1 bis 5, dadurch gekennzeichnet, daß zum Auftragen des Thermoplastes auf die Stoßstellen eine mit dem heißem Thermoplast benetzte Platte verwendet wird.
